# EUROPÄISCHE PATENTANMELDUNG

(11) **EP 4 335 793 A1**
(43) Veröffentlichungstag der Anmeldung: **13.03.2024**
(21) Anmeldenummer: 23193921.6
(22) Anmeldetag: 29.08.2023
(51) Int. Cl.: B65G 47/82, B65G 21/20, B65G 47/71, B65G 47/76

(54) **ELEKTRISCH BETRIEBENER SEGMENTAUSLEITER**

(30) Priorität: 08.09.2022 DE 202022105098 U
(71) Anmelder: Krones AG, 93073 Neutraubling (DE)
(72) Erfinder: Gruenner, Matthias, 93073 Neutraubling (DE); Puerzer, Tobias, 93073 Neutraubling (DE)
(74) Vertreter: Bittner, Bernhard

(57) **Zusammenfassung**

Vorrichtung (1) zum Ausleiten und/oder Verteilen von Stückgütern und insbesondere Gebinden (10) aus einem Transportpfad entlang dessen die Stückgüter mit einer Transporteinrichtung (2) transportiert werden, wobei diese Transporteinrichtung eine bewegliche Förderfläche (22) aufweist, auf welcher die Stückgüter transportiert werden und mit einer Vielzahl von Drängeinrichtungen (42, 44, 46) welche in diesen Transportpfad zustellbar sind, um die Stückgüter in einer senkrecht zu dem Transportpfad stehenden Richtung zu drängen, wobei diese Drängeinrichtungen (42. 44. 46) in einer geradlinigen Richtung (Y) bewegbar sind, wobei diese geradlinige Richtung eine Komponente aufweist, welche senkrecht zu dem Transportpfad (P) der Stückgüter (10) steht, wobei diesen Drängeinrichtungen (42, 44, 46) jeweils Antriebseinrichtungen (82, 84..) zugeordnet sind, welche diese Bewegungen der Drängeinrichtungen (42, 44, 46) bewirken, dadurch gekennzeichnet, dass die Antriebseinrichtungen (82, 84..) als elektrisch betriebene Antriebseinrichtungen ausgeführt sind.

## Beschreibung

Die vorliegende Erfindung bezieht sich auf eine Vorrichtung zum Ausleiten von Stückgütern und insbesondere Gebinden aus einem Gebindestrom insbesondere im Bereich der getränkeherstellenden Industrie. Aus dem Stand der Technik ist es bekannt, dass Stückgüter wie beispielsweise Gebinde aber auch Getränkekisten kontrolliert werden, ob sie bestimmten Vorgaben entsprechen. Ist dies nicht der Fall, können derartige Gebinde aus einem Transportpfad ausgeleitet werden.

Aus dem Stand der Technik sind viele Vorrichtungen und Verfahren bekannt, welche eine derartige Ausleitung ermöglichen. So beschreibt beispielsweise die DE 4134009 A1 eine Vorrichtung für eine bahnförmige Fördereinrichtung. Dabei sind heb- und senkbare hydraulisch beschriebene Segmente vorgesehen, welche eine Ausleitung von Transportgütern ermöglichen. Solche Ausleiteinrichtungen werden daher auch als Segmentausleiter bezeichnet.

Die DE 10 2009 040 604 A1 beschreibt ebenfalls eine Vorrichtung zum Ausleiten von Transportgütern. Dabei ist ebenfalls ein pneumatisch, hydraulisch oder elektrisch betriebener Antrieb vorgesehen, mittels dessen ein Ausleiten von Gütern möglich ist. Zum Ausleiten dient hierbei ein Ablenkbügel, der in seiner Gesamtheit geschwenkt wird.

Aus der EP 1 609 474 ist eine Vorrichtung zum Ausschleusen von auf einer zuführenden Kastenbahn ankommenden Getränkekästen bekannt. Dabei ist eine Vielzahl von Abweisschildern vorgesehen, welche entsprechend dem Lauf des auszuschleusenden Behältnisses in einer vertikalen Richtung in den Weg des Kastens verschieblich sind. Die verwendeten Antriebsmittel sind dabei pneumatisch betätigte Kolbenzylinder.

Auch ist es aktuell aus dem Stand der Technik bekannt, Segmentausleiter mit Pneumatikzylindern zu bestücken. Derartige pneumatisch betriebenen Segmentausleiter funktionieren gut, haben aber insbesondere bei sehr kurzen Schaltzeiten das Problem, dass die Verschlauchung eine große Herausforderung darstellt.

Eine falsche Verschlauchung oder auch zu lange Schlauchlängen können die Funktion stark beeinträchtigen. Der vorliegenden Erfindung liegt daher die Aufgabe zugrunde, derartige Ausleiteinrichtungen insbesondere auch für hohe Betriebsgeschwindigkeiten zu verbessern. Diese Aufgaben werden erfindungsgemäß durch die Gegenstände der unabhängigen Patentansprüche erreicht. Vorteilhafte Ausführungsformen und Weiterbildungen sind Gegenstand der Unteransprüche.

Eine erfindungsgemäße Vorrichtung und insbesondere eine Segmentausleitvorrichtung zum Ausleiten (und/oder Verteilen) von Stückgütern und insbesondere Gebinden aus einem Transportpfad, entlang dessen die Stückgüter mittels einer Transporteinrichtung transportiert werden, wobei diese Transporteinrichtung eine beweglich Förderfläche aufweist, auf welcher die Stückgüter transportiert werden, weist eine Vielzahl von Drängeinrichtungen (bzw. Ausleitsegmente) auf, welche in diesen Transportpfad zustellbar sind, um die Stückgüter in einer senkrecht zu dem Transportpfad stehenden Richtung zu drängen, wobei die Drängeinrichtungen in einer geradlinigen Richtung bewegbar sind und wobei diese geradlinige Richtung eine Komponente aufweist, welche senkrecht zu dem Transportpfad der Stückgüter steht, wobei diesen Drängeinrichtungen jeweils Antriebseinrichtungen zugeordnet sind, welche diese Bewegungen der Drängeinrichtungen bewirken.

Erfindungsgemäß sind die Antriebseinrichtungen als elektrisch betriebene Einrichtungen ausgeführt.

Es wird darauf hingewiesen, dass die hier beschriebene Vorrichtung auch verwendet werden kann, um Ströme von Stückgütern auf mehrere Bahnen zu verteilen. So kann etwa ein einbahniger Transport von Gebinden in einen zwei oder mehrbahnigen Transport umgesetzt werden.

Bevorzugt sind die Drängeinrichtungen zwischen einer ersten Stellung, in welcher sie die Stückgüter nicht kontaktieren und einer zweiten Stellung, in welcher sie die Stückgüter kontaktieren, um sie in einer vorgegebenen Richtung und insbesondere einer senkrecht zu dem Transportpfad stehenden Richtung drängen, bewegbar.

Besonders bevorzugt sind die Drängeinrichtungen hintereinander angeordnet und insbesondere in der Transportrichtung und/oder der Ausleitrichtung der Stückgüter hintereinander angeordnet.

Besonders bevorzugt ist der Transportpfad, auf welchem die Stückgüter, falls sie nicht ausgeleitet werden sollen, geradlinig.

Durch das Vorsehen einzelner Drängeinrichtungen, welche auch als Ausleitsegmente bezeichnet werden können wird erreicht, dass auch bei hohen Transportgeschwindigkeiten einzelne Stückgüter ausgeleitet werden können.

Bei einer weiteren vorteilhaften Ausführungsform ist die Transporteinrichtung als Transportband ausgeführt. Insbesondere handelt es sich bei den Gebinden um mit Behältnissen bestückte Getränkebehältniskisten oder -kästen oder auch um Zusammenstellungen aus mehreren Behältnissen.

Bei einer bevorzugten Ausführungsform sind die Drängeinrichtungen plattenartige Körper, die insbesondere an einem Träger angeordnet sind. Besonders bevorzugt dient eine Oberfläche dieser plattenartigen Körper als Fläche, der gegenüber die Stückgüter transportiert werden und/oder transportierbar sind.

Besonders bevorzugt sind die Drängeinrichtungen in der Transportrichtung der Stückgüter stationär gegenüber den Stückgütern.

Es wird daher vorgeschlagen, die im Stand der Technik verwendeten Pneumatikzylinder durch elektrische Antriebe, beispielsweise Servomotoren zu ersetzen. Falls auf eine Pneumatik verzichtet wird, kann die oben genannte Problematik behoben werden. Durch die elektronischen Ansteuerungen spielen auch Kabellängen nur eine untergeordnete Rolle.

Die hier beschriebene Erfindung kann auch bequem in bestehenden Anlagen nachgerüstet werden. Die Pneumatikzylinder können mechanisch einfach durch kleine Umbauten zu Elektrozylindern geändert werden. Eine Ansteuerung dieser Elektrozylinder könnte jedoch ähnlich ablaufen wie bei einer Pneumatikvariante.

Die hier vorgeschlagene Umstellung auf elektrisch betätigte Lineareinheiten bringt Vorteile einer höheren Geschwindigkeit mit sich und daneben auch individuellere Einstellmöglichkeiten jedes Antriebs und auch nochmals eine zusätzliche Erhöhung der Leistungsfähigkeit. Auch die Möglichkeit, diese Einheit in Bereichen einzusetzen, welche üblicherweise über keine pneumatische Grundversorgung verfügen (beispielsweise in der Materialflusstechnik) ist ein Vorteil der vorgeschlagenen Erfindung.

Bei einer vorteilhaften Ausführungsform weisen die Antriebseinrichtungen positionsgeregelte Linearantriebe, Elektrozylinder und/oder Servomotoren auf. Bevorzugt sind die Antriebe selbsthemmend, d.h. verbleiben bei einem eventuellen Stromausfall in ihrer aktuellen Stellung.

Besonders bevorzugt ist eine Hubhöhe der Antriebseinrichtungen veränderbar und insbesondere steuerungsseitig veränderbar. Dies ist ein Vorteil, der sich aus der Verwendung von elektrischen Antrieben ergibt. Zusätzlich können die Antriebseinrichtungen Endanschläge aufweisen, welche eine maximale Hubbewegung der Drängeinrichtungen begrenzen.

Bevorzugt steht die geradlinige Richtung, in der die Drängeinrichtungen bewegt werden können, senkrecht zu dem Transportpfad der Stückgüter. Besonders bevorzugt handelt es sich bei der geradlinigen Richtung um eine vertikale Richtung.

Bei einer weiteren vorteilhaften Ausführungsform sind die Drängeinrichtungen wenigstens teilweise bezüglich einander in einer zweiten Richtung, welche senkrecht zu dem Transportpfad steht versetzt. Insbesondere ist diese zweite Richtung auch senkrecht zu der Bewegungsrichtung der Drängeinrichtungen. Besonders bevorzugt wird auf diese Weise eine Ausleitkurve bestimmt, entlang derer die Stückgüter ausgeleitet werden.

Bevorzugt weist diese Ausleitkurve wenigstens einen ersten gekrümmten Abschnitt auf. Bevorzugt weist diese Ausleitkurve einen zweiten gekrümmten Abschnitt auf. Bevorzugt ist zwischen dem ersten gekrümmten Abschnitt und dem zweiten gekrümmten Abschnitt ein geradliniger Abschnitt vorgesehen.

Bei einer weiteren vorteilhaften Ausführungsform sind die Drängeinrichtungen in der ersten Richtung in einem Bewegungshub bewegbar, der größer ist als fünf cm, bevorzugt größer als zehn cm, bevorzugt größer als 15 cm. Bei einer weiteren Ausführungsform sind die Drängeinrichtungen in der ersten Richtung in einem Bewegungshub bewegbar, der kleiner ist als 100 cm, bevorzugt kleiner als 90 cm, bevorzugt kleiner als 80 cm, bevorzugt kleiner als 70 cm und bevorzugt kleiner bzw. geringer als 60 cm.

Wie oben erwähnt ist besonders bevorzugt dieser Bewegungshub einstellbar. Dabei kann die Einstellung beispielsweise an die Gestalt der auszuleitenden Stückgüter erfolgen. Bevorzugt sind eine erste Endposition und einer zweiten Endposition, zwischen denen die Drängeinrichtungen bewegbar sind, parametrierbar.

Besonders bevorzugt sind die erste und zweite Endposition in Abhängigkeit des zu verarbeitenden Gebindes einstellbar. Durch eine erste Endlage, die bevorzugt nur wenige Zentimeter über dem Gebinde einstellbar ist, ergibt sich ein verkürzter Fahrweg um das Gebinde umzuleiten. Ebenso kann eine zweite Endlage auf einen möglichst günstigen Schwerpunkt des Gebindes parametriert werden.

Bevorzugt sind die Bewegungen der einzelnen Drängeinrichtungen unabhängig voneinander steuerbar. Beispielsweise ist es möglich, dass die Drängeinrichtungen nacheinander bzw. aufeinanderfolgenden in der Transportrichtung nach unten d.h. in ihre untere Endposition zugestellt werden um ein einzelnes Stückgut bzw. Gebinde auszuleiten. Sobald das die einzelnen Drängeinrichtungen passiert hat, können diese wieder zurückgezogen werden, um den Pfad für ein nachfolgendes Stückgut freizugeben.

Bei einer weiteren vorteilhaften Ausführungsform weist die Vorrichtung mehr als vier, bevorzugt mehr als sechs, bevorzugt mehr als acht und bevorzugt mehr als zehn Drängeinrichtungen auf.

Bei einer weiteren Ausführungsform weist die Vorrichtung mehr als zwei Förderflächen auf. Damit ist die Möglichkeit gegeben bei entsprechender Anzahl von Drängeinrichtungen auf drei oder -n Förderflächen zu verteilen.

Bei einer weiteren vorteilhaften Ausführungsform weist die Vorrichtung weniger als 40, bevorzugt weniger als 30, bevorzugt weniger als 25 und bevorzugt weniger als 20 Drängeinrichtungen auf. In diesen genannten Dimensionen hat sich einerseits die Drängeinrichtung als sehr vorteilhaft erwiesen, weil sie unterschiedliche Ausleitungen ermöglicht. Andererseits kann durch eine nicht allzu hohe Anzahl an Drängeinrichtungen der Steuerungsaufwand noch in vertretbaren Grenzen gehalten werden.

Bei einer weiteren vorteilhaften Ausführungsform weist die Vorrichtung eine gemeinsame Trägereinrichtung auf, an der die Drängeinrichtungen und/oder deren Antriebseinrichtungen angeordnet sind. Besonders bevorzugt sind sämtliche Antriebseinrichtungen an der Trägereinrichtung angeordnet und an den Antriebseinrichtungen wiederum (beispielsweise ebenfalls über Träger) die Drängeinrichtungen.

Besonders bevorzugt sind sämtliche Drängeinrichtungen gleichartig ausgebildet.

Bei einer weiteren Ausführungsform sind die Drängeinrichtungen auch bezüglich einer Achse schwenkbar, welche insbesondere in Richtung der Hubbewegung der Drängeinrichtungen verläuft. Auf diese Weise ist eine besonders einfache Einstellung der Drängeinrichtungen möglich.

Bei einer bevorzugten Ausgestaltung ist jedoch wenigstens abschnittsweise der Ausleitpfad entlang dessen die Stückgüter ausgeleitet werden geradlinig.

Bei einer weiteren vorteilhaften Ausführungsform ist ein Abstand zwischen der Trägereinrichtung und der Transporteinrichtung und insbesondere ein Abstand in der vertikalen Richtung veränderbar. Auch auf diese Weise ist eine Grobeinstellung auf unterschiedliche Stückgüter möglich.

Bei einer weiteren vorteilhaften Ausführungsform ist ein Ausleitpfad, entlang dessen die Stückgüter leitbar oder ausleitbar sind veränderbar. Dies kann insbesondere durch eine Veränderung der Positionen einzelner Drängeinrichtungen senkrecht zu dem Transportpfad und insbesondere senkrecht zu der Bewegungsrichtung der Drängeinrichtung erfolgen.

Bei einer weiteren vorteilhaften Ausführungsform ist eine Position wenigstens einer der Drängeinrichtungen in einer senkrecht zu der Bewegungsrichtung der Drängeinrichtung stehenden Richtung veränderbar.

Bevorzugt ist die Position mehrerer Drängeinrichtungen in der besagten Richtung veränderbar. Besonders bevorzugt ist, wie oben erwähnt auch eine Position wenigstens einer Drängeinrichtung in einer Richtung senkrecht zu dem Transportpfad und insbesondere senkrecht zu der Bewegungsrichtung (bzw. Hubrichtung der Drängeinrichtungen) möglich.

Auf diese Weise kann eine Anpassung an unterschiedliche Stückgüter erreicht werden, und es kann insbesondere das Maß der Ausleitung senkrecht zu dem Transportpfad verändert werden. Auch die entsprechende Krümmung der Ausleitung ist veränderbar.

Bei einer weiteren vorteilhaften Ausführungsform ist eine Bewegungsgeschwindigkeit, mittels derer die Drängeinrichtungen bewegbar sind, veränderbar und/oder einstellbar.

Bei einer weiteren vorteilhaften Ausführungsform ist eine Kraft mittels derer die Drängeinrichtungen bewegbar sind veränderbar und/oder einstellbar.

Beide Eigenschaften sind weitere Vorteile, die sich aus der Verwendung elektrisch betriebener Antriebseinrichtungen ergeben. Auf diese Weise kann insbesondere die Ausfahrkraft und/oder die Ausfahrgeschwindigkeit eingestellt dosiert werden.

Bei einer weiteren bevorzugten Ausführungsform ist auch eine Beschleunigung, mit der die Drängeinrichtungen bewegt werden einstellbar.

Diese Aspekte sind insbesondere für die Betriebssicherheit sehr wichtig. So kann beispielsweise ein Servomotor genauso schnell ausfahren wie ein Pneumatikzylinder aber mit weniger Kraft. Auf diese Weise ergeben sich bessere Sicherheitseinstufungen, da man sich nicht so schwer verletzen kann, wenn man in die Maschine greift.

Bei einer weiteren bevorzugten Ausführungsform weisen die Antriebseinrichtungen eine Steuerungseinrichtung auf, welche bewirkt, dass eine Bewegung der Antriebseinrichtung und/oder eine Bewegung von Drängeinrichtungen angehalten wird, falls eine Motorkraft, die zum Bewegen der Drängeinrichtung dient, einen vorgegebenen Grenzwert übersteigt.

Bei einer weiteren vorteilhaften Ausführungsform weist die Vorrichtung eine Kollisionserfassungseinrichtung auf, welche dazu geeignet und bestimmt ist, (insbesondere unerwünschte) Kollisionen der Drängeinrichtungen mit anderen Elementen wie etwa den Gebinden oder auch einem Benutzer zu erfassen. Falls eine derartige Kollision festgestellt wird, kann beispielsweise die Bewegung eines Drängelements angehalten werden oder dieses auch wieder zurückgezogen werden.

Die vorliegende Erfindung ist weiterhin auf eine Vorrichtung zum Transportieren von Stückgütern und insbesondere von Gebinden gerichtet, welche wenigstens eine Transporteinrichtung aufweist, welche die Stückgüter entlang eines vorgegebenen Transportpfads transportiert. Weiterhin ist wenigstens eine Vorrichtung der oben beschriebenen Art vorgesehen.

Bei einer bevorzugten Ausführungsform weist die Vorrichtung eine Positionserfassungseinrichtung auf, welche eine Position der Stückgüter entlang des Transportpfads erfasst und besonders bevorzugt ist eine Steuerungseinrichtung vorgesehen, welche die Antriebseinrichtungen unter Berücksichtigung dieser Position steuert.

Auf diese Weise kann beispielsweise die Position eines fehlerhaften Stückguts erfasst werden und daraufhin die Ausleiteinrichtung aktiviert werden. Diese kann bewirken, dass sich die einzelnen Drängmittel in den Transportpfad der Behältnisse stellen und auf diese Weise eine Ausleitung der Stückgüter und insbesondere eines einzelnen Stückguts oder eine Gruppe von Stückgütern ermöglichen.

Die vorliegende Erfindung ist weiterhin auf Verfahren zum Ausleiten und/oder Verteilen von Stückgütern und insbesondere Gebinden aus einem Transportpfad gerichtet, entlang dessen die Stückgüter mit einer Transporteinrichtung transportiert werden, wobei diese Transporteinrichtung eine bewegliche Förderfläche aufweist, auf welcher die Stückgüter transportiert werden und mit einer Vielzahl von Drängeinrichtungen welche in diesen Transportpfad zugestellt werden, um die Stückgüter in einer senkrecht zu dem Transportpfad stehenden Richtung zu drängen, wobei diese Drängeinrichtungen in einer geradlinigen Richtung bewegt werden, wobei diese geradlinige Richtung eine Komponente aufweist, welche senkrecht zu dem Transportpfad der Stückgüter steht, wobei diesen Drängeinrichtungen jeweils Antriebseinrichtungen zugeordnet sind oder werden, welche diese Bewegungen der Drängeinrichtungen bewirken.

Erfindungsgemäß sind und/oder werden die Antriebseinrichtungen als elektrisch betriebene Antriebseinrichtungen ausgeführt sind.

Bei einem bevorzugten Verfahren werden die Drängeinrichtungen in der ersten Richtung in einem Bewegungshub bewegt, der größer ist als 5cm, bevorzugt größer als 10cm, bevorzugt größer als 15cm.

Bei einem weiteren bevorzugteb Verfahren werden die Drängeinrichtungen in der ersten Richtung in einem Bewegungshub bewegt, der kleiner ist als 100cm, bevorzugt kleiner als 90cm, bevorzugt kleiner als 80cm und besonders bevorzugt kleiner als 70cm und bevorzugt kleiner als 60cm.

Weitere Vorteile und Ausführungsformen ergeben sich aus den beigefügten Zeichnungen. Darin zeigen:
- Fig. 1: eine Darstellung einer erfindungsgemäßen Vorrichtung;
- Fig. 2: eine Seitenansicht der in Fig. 1 gezeigten Vorrichtung;
- Fig. 3: eine Draufsicht auf die in Fig. 1 gezeigte Vorrichtung; und
- Fig. 4: eine Darstellung der in Fig. 3 gezeigten Vorrichtung einschließlich einer Transporteinrichtung.

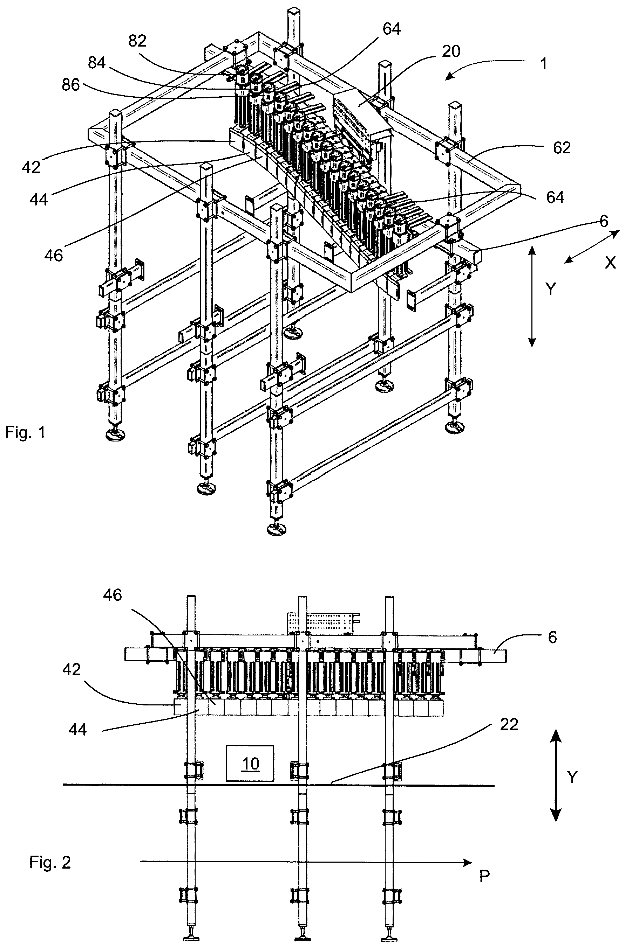

Fig. 1 zeigt eine perspektivische Darstellung einer Vorrichtung bzw. eines Segmentausleiters zum Ausleiten von Stückgütern. Diese Vorrichtung weist eine Vielzahl von Drängeinrichtungen 42, 44, 46 auf, welche dazu dienen, Stückgüter aus dem Transportpfad auszuschleusen. Wie in Fig 1 gezeigt, weist die Vorrichtung eine Vielzahl derartiger Drängeinrichtungen auf, die hintereinander und bevorzugt unmittelbar hintereinander angeordnet sind.

Diese Drängeinrichtungen 42, 44, 46 bestimmen, wenn sie in den Transportpfad von (nicht gezeigten Stückgütern) bewegt bzw. gestellt sind, die Ausleitung dieser Stückgüter

Die Bezugszeichen 82, 84, 86 kennzeichnen Antriebseinrichtungen, welche eine Bewegung der Drängeinrichtungen 42. 44. 46 in der Richtung Y bewirken. Dabei dient die Antriebseinrichtung 82 zum Bewegen der Drängeinrichtung 42, die Antriebseinrichtung 44 zum Bewegen der Drängeinrichtung 84 usw. Insgesamt ist jeder Drängeinrichtung eine derartige Antriebseinrichtung zugeordnet. Die Antriebseinrichtungen können beispielsweise als elektrische, insbesondere positionsgeregelte Linearmotoren und/oder als Servomotoren ausgebildet sein

Das Bezugszeichen 6 kennzeichnet einen Träger, an dem die einzelnen Drängeinrichtungen angeordnet sind. Dabei sind bevorzugt wiederum an dem Träger Halteeinrichtungen 64 vorgesehen, die zum Halten zumindest einiger der Drängeinrichtungen dienen. Weiterhin erlauben bevorzugt auch diese Halteeinrichtungen eine Verschiebung der Drängeinrichtungen in einer Richtung z, die senkrecht zu der Richtung Y und bevorzugt auch senkrecht zu dem Transportpfad der Stückgüter (falls diese nicht ausgeleitet werden).

Das Bezugszeichen 62 bezieht sich auf ein Gestell, an dem der Träger 6 angeordnet ist. Dieses Gestell kann auch zum Tragen einer (nicht gezeigten) Transporteinrichtung dienen.

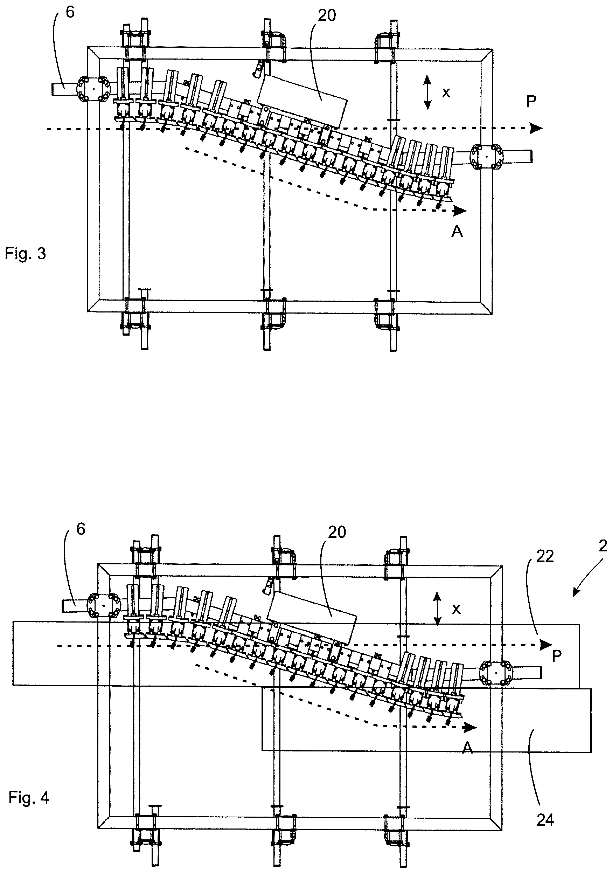

Fig.2 zeigt eine Seitenansicht der in Fig. 1 gezeigten Vorrichtung. Hier ist auch die (nur schematisch dargestellte) Förderfläche 22 erkennbar, auf welcher die Stückgüter 10 transportiert werden. Das Bezugszeichen 20 (Fig. 3) kennzeichnet eine Steuerungseinrichtung, welche zum Ansteuern der einzelnen Antriebseinrichtungen 82. 84, 86 dient. Diese Steuerungseinrichtung kann dabei auch in Kommunikationsverbindung mit einem Antrieb der Transporteinrichtung stehen, welche die Stückgüter transportiert.

Fig. 3 zeigt eine Draufsicht auf die erfindungsgemäße Vorrichtung. Hier ist der Transportpfad P dargestellt, entlang dessen die Stückgüter transportiert werden, wenn diese nicht ausgeleitet werden. Das Bezugszeichen A kennzeichnet den Ausleitpfad, entlang dessen eine Ausleitung erfolgt.

Fig. 4 zeigt die Vorrichtung aus Fig. 3, wobei hier zusätzlich die Transporteinrichtung 2 dargestellt ist. Diese weist eine erste Förderfläche 22, bei der es sich etwa um ein erstes Transportband handeln kann und auf dem die Stückgüter, die nicht ausgeleitet werden, transportiert werden.

Das Bezugszeichen 24 kennzeichnet eine zweite Förderfläche, etwa ein zweites Transport, auf dem die ausgeleiteten Stückgüter abtransportiert werden. Bevorzugt verlaufen die erste Förderfläche 22 und die zweite Förderfläche 24 parallel zueinander. Es wäre jedoch auch denkbar, dass die zweite Förderfläche schräg zu der ersten Förderfläche die Stückgüter abfördert.

Die Anmelderin behält sich vor, sämtliche in den Anmeldungsunterlagen offenbarten Merkmale als erfindungswesentlich zu beanspruchen, sofern sie einzeln oder in Kombination gegenüber dem Stand der Technik neu sind. Es wird weiterhin darauf hingewiesen, dass in den einzelnen Figuren auch Merkmale beschrieben wurden, welche für sich genommen vorteilhaft sein können. Der Fachmann erkennt unmittelbar, dass ein bestimmtes in einer Figur beschriebenes Merkmal auch ohne die Übernahme weiterer Merkmale aus dieser Figur vorteilhaft sein kann. Ferner erkennt der Fachmann, dass sich auch Vorteile durch eine Kombination mehrerer in einzelnen oder in unterschiedlichen Figuren gezeigter Merkmale ergeben können.

## Patentansprüche

1. Vorrichtung (1) zum Ausleiten und/oder Verteilen von Stückgütern und insbesondere Gebinden (10) aus einem Transportpfad entlang dessen die Stückgüter mit einer Transporteinrichtung (2) transportiert werden, wobei diese Transporteinrichtung eine bewegliche Förderfläche (22) aufweist, auf welcher die Stückgüter transportiert werden und mit einer Vielzahl von Drängeinrichtungen (42, 44, 46) welche in diesen Transportpfad zustellbar sind, um die Stückgüter in einer senkrecht zu dem Transportpfad stehenden Richtung zu drängen, wobei diese Drängeinrichtungen (42. 44. 46) in einer geradlinigen Richtung (Y) bewegbar sind, wobei diese geradlinige Richtung eine Komponente aufweist, welche senkrecht zu dem Transportpfad (P) der Stückgüter (10) steht, wobei diesen Drängeinrichtungen (42, 44, 46) jeweils Antriebseinrichtungen (82, 84..) zugeordnet sind, welche diese Bewegungen der Drängeinrichtungen (42, 44, 46) bewirken
**dadurch gekennzeichnet, dass**
die Antriebseinrichtungen (82, 84..) als elektrisch betriebene Antriebseinrichtungen ausgeführt sind.

2. Vorrichtung (1) nach Anspruch 1,
**dadurch gekennzeichnet, dass**
die Antriebseinrichtungen positionsgeregelte Linearantriebe, Elektrozylinder oder Servomotoren aufweisen und/oder die Antriebseinrichtung selbsthemmende Antriebseinrichtungen sind.

3. Vorrichtung nach wenigstens einem der vorangegangenen Ansprüche,
**dadurch gekennzeichnet, dass**
die geradlinige Richtung senkrecht zu dem Transportpfad (P) der Stückgüter steht.

4. Vorrichtung nach wenigstens einem der vorangegangenen Ansprüche,
**dadurch gekennzeichnet, dass**
die Drängeinrichtungen (42, 44, 46) wenigstens teilweise bezüglich einander in einer zweiten Richtung (Z), welche senkrecht zu dem Transportpfad (P) steht versetzt sind.

5. Vorrichtung nach wenigstens einem der vorangegangenen Ansprüche,
**dadurch gekennzeichnet, dass**
die Drängeinrichtungen in der ersten Richtung (Y) in einem Bewegungshub bewegbar sind, der größer ist als 5cm, bevorzugt größer als 10cm, bevorzugt größer als 15cm und/oder dass die Drängeinrichtungen in der ersten Richtung in einem Bewegungshub bewegbar sind, der kleiner ist als 100cm, bevorzugt kleiner als 90cm, bevorzugt kleiner als 80cm und besonders bevorzugt kleiner als 70cm und bevorzugt kleiner als 60cm.

6. Vorrichtung nach wenigstens einem der vorangegangenen Ansprüche,
**dadurch gekennzeichnet, dass**
die Vorrichtung mehr als 4, bevorzugt mehr als 6, bevorzugt mehr als 8 und bevorzugt mehr als 10 Drängeinrichtungen aufweist und/oder die Vorrichtung weniger als 40, bevorzugt weniger als 30, bevorzugt weniger als 25 und bevorzugt weniger als 20 Drängeinrichtungen aufweist.

7. Vorrichtung nach wenigstens einem der vorangegangenen Ansprüche,
**dadurch gekennzeichnet, dass**
die Vorrichtung (1) eine gemeinsame Trägereinrichtung (6) aufweist, an der die Drängeinrichtungen und/oder deren Antriebseinrichtungen angeordnet sind.

8. Vorrichtung (1) nach dem vorangegangenen Anspruch,
**dadurch gekennzeichnet, dass**
die gemeinsame Trägereinrichtung (6) einen wenigstens abschnittsweise gekrümmten Verlauf aufweist und/oder die Trägereinrichtung (6) sich parallel zu einem Ausleitpfad (A) erstreckt, entlang dessen die Stückgüter ausgeleitet werden.

9. Vorrichtung (1) nach einem der vorangegangenen Ansprüche 6 - 8,
**dadurch gekennzeichnet, dass**
ein Abstand zwischen der Trägereinrichtung und der Transporteinrichtung veränderbar ist.

10. Vorrichtung (1) nach einem der vorangegangenen Ansprüche 7 - 8,
**dadurch gekennzeichnet, dass**
ein Ausleitpfad, entlang dessen die Stückgüter leitbar sind, veränderbar ist.

11. Vorrichtung (1) nach einem der vorangegangenen Ansprüche 7 - 8,
**dadurch gekennzeichnet, dass**
eine Position wenigstens einer der Drängeinrichtungen in einer senkrecht zu der Bewegungsrichtung der Drängeinrichtung stehenden Richtung veränderbar ist.

12. Vorrichtung (1) nach einem der vorangegangenen Ansprüche 7 - 8,
**dadurch gekennzeichnet, dass**
eine Bewegungsgeschwindigkeit, mittels derer die Drängeinrichtungen bewegbar sind, veränderbar und/oder einstellbar ist und/oder eine Kraft mittels derer die Drängeinrichtungen bewegbar sind veränderbar und/oder einstellbar sind.

13. Vorrichtung (50) zum Transportieren von Stückgütern und insbesondere von Gebinden mit wenigstens einer Transporteinrichtung (2), welche die Stückgüter entlang eines vorgegebenen Transportpfads transportiert und einer Vorrichtung nach wenigstens einem der vorangegangenen Ansprüche.

14. Vorrichtung nach Anspruch 13,
**dadurch gekennzeichnet, dass**
die Vorrichtung (50) eine Positionserfassungseinrichtung aufweist, welche eine Position der Stückgüter entlang des Transportpfads (P) erfasst und bevorzugt eine Steuerungseinrichtung vorgesehen ist, welche die Antriebseinrichtungen unter Berücksichtigung dieser Position steuert.

15. Verfahren zum Ausleiten und/oder Verteilen von Stückgütern und insbesondere Gebinden (10) aus einem Transportpfad entlang dessen die Stückgüter mit einer Transporteinrichtung (2) transportiert werden, wobei diese Transporteinrichtung eine bewegliche Förderfläche (22) aufweist, auf welcher die Stückgüter transportiert werden und mit einer Vielzahl von Drängeinrichtungen (42, 44, 46) welche in diesen Transportpfad zugestellt werden, um die Stückgüter in einer senkrecht zu dem Transportpfad stehenden Richtung zu drängen, wobei diese Drängeinrichtungen (42. 44. 46) in einer geradlinigen Richtung (Y) bewegt werden, wobei diese geradlinige Richtung eine Komponente aufweist, welche senkrecht zu dem Transportpfad (P) der Stückgüter (10) steht, wobei diesen Drängeinrichtungen (42, 44, 46) jeweils Antriebseinrichtungen (82, 84..) zugeordnet sind, welche diese Bewegungen der Drängeinrichtungen (42, 44, 46) bewirken
**dadurch gekennzeichnet, dass**
die Antriebseinrichtungen (82, 84..) als elektrisch betriebene Antriebseinrichtungen ausgeführt sind.
